# EUROPEAN PATENT APPLICATION

(11) **EP 4 712 459 A1**
(43) Date of publication of application: **18.03.2026**
(21) Application number: 25202010.2
(22) Date of filing: 12.09.2025
(51) Int. Cl.: H04M 1/64, H04M 3/436, H04M 3/493, H04M 7/00

(54) **SYSTEM AND METHOD FOR PERSONALIZED CALL MANAGEMENT AND TALK AUTOMATION**

(30) Priority: 17.09.2024 US 202418888000
(71) Applicant: Mitel Networks Corporation, Ottawa, Ontario K2K 3K1 (CA)
(72) Inventor: Braganza, Jonathan, Ottawa, K2E 6P2 (CA); Naidoo, Logendra, Ottawa, K1S 0W8 (CA)
(74) Representative: McDougall, James

(57) **Abstract**

A computerized system is configured to automatically manage an incoming phone call from a caller to a cellular phone or an internet phone. The computerized system includes a first user device (e.g., a cell phone, internet phone, etc.) assigned to a first user. The system further includes an automated assistant module in communication with the first user device, a synthesized speech generator in communication with the automated assistant module, and a phone number directory in communication with the automated assistant module. The automated assistant module is configured to, when the incoming call is received by the first user device, determine (a) an importance of the incoming call based on (i) a location or number from which the incoming call originated, (ii) words used by the caller, (iii) a schedule of the first user, and (b) based on the importance of the incoming call, an appropriate response.

## Description

### FIELD

This disclosure relates to the field of telecommunication services. More particularly, the disclosure relates to methods and systems for call management and talk automation.

### BACKGROUND

Wireless communication is growing at a tremendous pace. Wireless (or cellular) phone use, in particular, has been escalating in most countries across the world. Having an individual cell phone is becoming almost a necessity in major cities. Having a cellular phone enables a person to be reachable/accessible for communication by clients, coworkers, family, and others with the device's phone number. A cellular phone also provides the user the flexibility of remaining in/initiating phone communication at all times, regardless of his/her geographic/physical location.

Although the popularity of cell phones has increased, the usage of the phone function has decreased. The decline in traditional voice call usage can be attributed to the prevalence of cell phones and the increase in scam/spam calls. This has led to a preference for text-based communication methods. For example, some people dislike answering their phone calls due to the rise in scam/spam phone calls.

Various services exist to allow callees to screen incoming callers. For example, services such as caller identification (caller ID) can provide the telephone number of the caller in real-time allowing the callee to know the number (and in some instances a name) of the caller. However, if the caller is unknown or if the callee is busy, the call may be ignored or missed by the callee. Services such as voicemail may be used for the purpose of call completion when a caller leaves a message asking the destination to call the caller back. However, the information or purpose of the call may be old by the time the callee calls back the caller.

### SUMMARY

A first aspect of this disclosure provides a computerized system configured to automatically manage an incoming call from a caller to a cellular phone or an internet phone, wherein the computerized system comprises: a first user device that is the cellular phone or the internet phone and that is assigned to a first user; a computerized telephony network in communication with the first user device; an automated assistant module in communication with the first user device; a synthesized speech generator in communication with the automated assistant module; and a phone number directory in communication with the automated assistant module; wherein the automated assistant module is configured to, when the incoming call is received by the first user device, determine (a) an importance of the incoming call based on (i) a location or number from which the incoming call originated, (ii) words used by the caller, (iii) a schedule of the first user, and (b) based on the importance of the incoming call, an appropriate response.

The appropriate response may be one of the automated assistant module (a) disconnecting the incoming call, (b) taking a message, (c) answering the incoming call using a voice generated by the synthesized speech generator, (d) sending an alert to the first user to answer the incoming call, and (e) sending a text message to the caller.

After determining the importance of the incoming call, the automated assistant module may be configured to schedule tasks (a) on the first user device, or (b) on another device via a communication from the first user device.

The task may comprise commanding the first user device to do one of the following (a) alert the user to answer the incoming call, (b) place an event on an electronic calendar of the first user, (c) send a SMS message to the first user or to the caller, or (d) schedule a meeting invitation on the first user device or on another device via a communication from the first user device.

The automated assistant module may be configured to answer the incoming call with the synthesized speech generator mimicking the voice of the first user.

The appropriate response of the automated assistant module may be to ask the caller the nature of the phone call.

The automated assistant module may analyze a caller response for one or more of (a) sentiment, and (b) urgency.

The automated assistant module may be further configured, based on the response, to ask a follow-up question and to determine the importance of the incoming call based in part on a response to the follow up question.

The automated assistant module may be further configured to monitor text messages transmitted to the first user device and, when a text message is received by the first user device (a) determine the importance of the text message, and (b) based on the importance of the text message, determine an appropriate response to the text message.

A second aspect of this disclosure provides a computerized method for automatically managing an incoming call from a caller to a cellular phone or an internet phone, wherein the computerized method comprises the following steps: receiving on a first user device that is the cellular phone or the internet phone, and is assigned to a first user, the incoming call, which is transmitted to the first user device by a computerized telephony network; when the incoming call is received by the first user device, an automated assistant module in communication with a phone number directory and a synthesized speech generator, determining (a) an importance of the incoming call based on (i) a location or number from which the incoming call originated, (ii) spoken words used by the caller, (iii) a schedule of the first user, and (b) based on the importance of the incoming call, an appropriate response in communication with the first user device; and the automated assistant module using a large language model (LLM) processor to generate text from spoken language and an artificial intelligence (AI) engine for understanding, identifying, and weighting the spoken words used by the caller.

The method may further comprise the step of the automated assistant module accessing a database of the first user's prior communications with the caller to assist in determining the importance of the incoming call.

The method may further comprise the step of a personal call manager (PCM) router connecting the incoming call to the LLM processor, which determines whether to route the incoming call directly to the first user or to the automated assistant module based on a caller's identification, a time of day, and a first user's schedule.

The automated assistant module may comprise a decision engine that, based on the output of the LLM processor, determines whether to (a) generate a task, (b) attempt to directly connect the incoming call to the first user, or (c) use a synthesized speech generator to respond to the incoming call using speech.

The LLM processor may be further configured to generate based on the importance (a) SMS or email responses to the caller, or (b) one or more tasks.

The first user device may comprise an API that enables the first user to modify the automated assistant module by (a) setting preferences for the automated assistant module, (b) instructing the automated assistant module to review call or text logs, and (c) adjusting settings for the operation of the automated assistant module.

A third aspect of this disclosure provides a computerized apparatus configured to automatically manage incoming phone calls to a cellular phone, wherein the computerized apparatus comprises: (a) a first user assigned to a first user device that is a cellular telephone or an internet telephone; (b) a computerized telephony network in communication with the first user device; (c) an automated assistant module in communication with the first user device; (d) a speech generator in communication with the automated assistant module; (e) a phone number directory in communication with the first user device and the automated assistant module; and (f) a processor and a tangible, non-transitory memory configured to communicate with the processor, the non-transitory memory having instructions stored thereon which, when executed by the processor, are configured to cause the computerized apparatus to execute a method including the following steps: the first user device receiving an incoming call transmitted by the computerized telephony network; and the automated assistant module (a) determining an importance of the incoming call, and (b) based on the importance of the incoming call determining an appropriate response.

The computerized apparatus of the third aspect may further include a synthesized speech generator in communication with the automated assistant module, and wherein when the processor executes the stored instructions it causes the computerized apparatus to further execute the step of the automated assistant module responding using a voice generated by the synthesized speech generator, wherein the voice mimics the voice of the first user and its tone and style are modified to match the first user's typical manner of speech based on the importance of the incoming call.

The processor may execute the stored instructions to cause the computerized apparatus to further execute the step of the automated assistant module responding using a text response to the caller.

The processor may execute the stored instructions to cause the computerized apparatus to further execute the steps of the LLM processor receiving the incoming call when the incoming call is directed to the automated assistant module, and the LLM processor converting the incoming call into text.

The processor may execute the stored instructions to cause the computerized apparatus to further execute the steps of, after the incoming call is received by the first user device, (a) a PCM router determining whether to route the incoming call to the automated assistant module, and (b) a decision engine analyzing the text generated by the LLM processor for urgency, intent, and context.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system for automatically managing an incoming phone call from a caller to a cellular phone or an internet phone according to aspects of this disclosure.
FIG. 2 is a flow chart of a system for automatically managing an incoming phone call from a caller to a cellular phone or an internet phone according to aspects of this disclosure.
FIG. 3 is a flow chart of a computerized method for automatically managing an incoming phone call from a caller to a cellular phone or an internet phone according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present disclosure provided herein is merely exemplary and is intended for purposes of illustration only; the following description is not intended to limit the scope of the disclosure as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure.

As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

As used herein, the terms application, module, analyzer, generator, engine, and the like can refer to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

This disclosure provides an automated personal assistant that uses a traditional phone number to handle calls. This assistant interacts autonomously with callers, managing interactions by asking for the purpose of the call and assessing factors such as sentiment, location, schedule, and urgency to decide the most appropriate response. If desirable, the assistant can convert the call into various tasks, such as transferring urgent calls directly to the user, sending follow-up text messages, or scheduling meeting invites for ongoing discussions.

As cell phone use has become widespread, many have shifted from traditional voice calls to text-based communication. This shift is driven by convenience and an increase in unwanted calls, such as spam or scams. The personal assistant addresses these changes by providing a solution that manages calls without requiring the user's direct involvement. If the user is unavailable to take a call, the assistant not only handles the call by creating tasks but also provides a summary of the interaction, ensuring that no desirable information or action is missed.

This system not only routes calls and takes messages, but also can impersonate the user when interacting with callers. This impersonation is sophisticated enough to mimic the user's voice characteristics, allowing the assistant to manage calls indistinguishably from the actual user, thereby maintaining privacy and reducing interruptions during the user's day.

Today, cell phones are everywhere. Most people have a cell phone and carry it around with them wherever they go. Although the popularity of cell phones has increased, the usage of the phone function has decreased. Many people prefer to send SMS, or use social messaging applications (e.g., WHATSAPP^{®}, among others) to send messages to converse with other people. Some people tend to dread answering their phone calls due to a rise in scam/SPAM phone calls and such. The present disclosure aims to address this by replacing the traditional voice line with a personal assistant that can triage calls based on priority, location, and schedule.

A computerized system of the present disclosure may enhance the concept of a traditional phone line by incorporating an automated personal assistant that not only manages calls based on priority, location, and schedule but also impersonates the user during interactions. Unlike standard virtual receptionist services that may involve human operators for routing calls or taking messages, this automated assistant may leverage advanced speech analytics and contextual information to determine the most appropriate action for each call.

A computerized system including an automated personal assistant of the present disclosure may have the ability to adopt the voice characteristics of the user it represents, providing a seamless and personalized caller experience. This capability allows the assistant to handle calls in a manner indistinguishable from the actual user, efficiently managing interactions without direct user involvement. The system's ability to impersonate adds a layer of convenience and privacy, ensuring that calls are handled professionally while reducing interruptions to the user's daily activities.

Systems and methods of the present disclosure may be facilitated through the existing infrastructure of legacy directory numbers (DN), allowing the assistant to be reached and operate just as if it were the actual user, thus maintaining continuity and ease of use for both the caller and the recipient. The automated personal assistant can interact autonomously with callers, managing interactions by asking for the purpose of the call and assessing factors such as sentiment, location, schedule, and urgency to decide the most appropriate response. If desired, the assistant can convert the call into various tasks, such as transferring urgent calls directly to the user, sending follow-up text messages, or scheduling meeting invites for ongoing discussions.

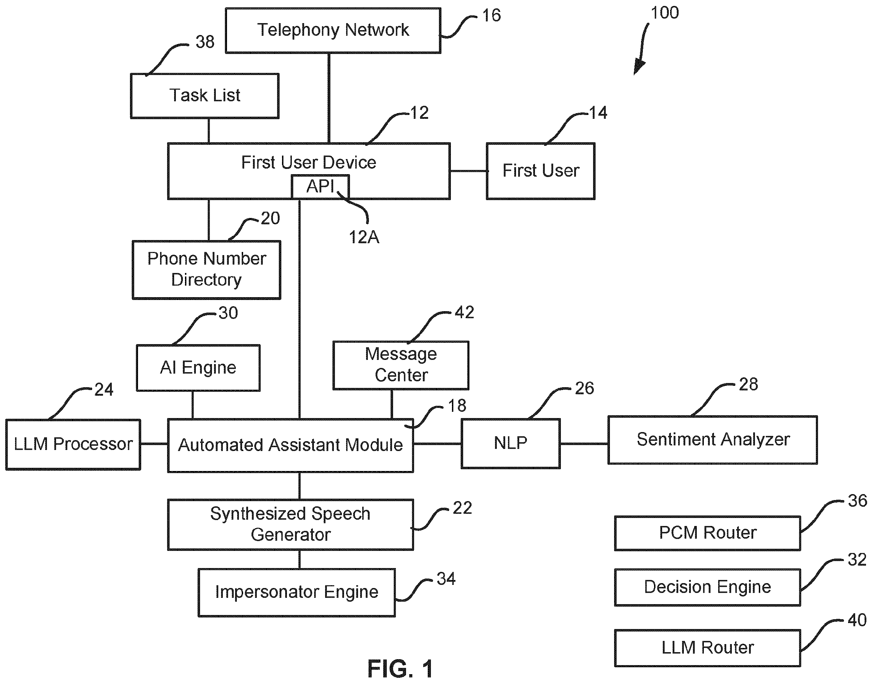

Turing to the Figures, wherein the purpose is to describe embodiments of this disclosure and not to limit the scope of the claims, FIG. 1 shows an exemplary computerized system 100 configured to automatically manage an incoming phone call from a caller to a first user device 12. The first user device 12 can be assigned to a first user 14. The first user device 12 can be any type of telephonic device, such as a cellular phone or an internet phone that is in communication with one or both of a telephony network 16 and an automated assistant module 18. The first user device 12 can be a personal computer. The telephony network 16 can be any type of telephone system capable of connecting user devices, such as cell phones, land-line phones, or computers. Calls to the first user device 12 can be routed through the automated assistant module 18 to and from telephony network 16, or routed directly to and from the telephony network 16 to the first user device 12.

The first user device 12 as shown is in communication with the telephony network 16 and the automated assistant module 18. In various embodiments, the first user device 12 includes an application programming interface (API) 12A that enables the first user 14 to modify the automated assistant module 18, for example by (a) setting preferences for the automated assistant module 18, (b) instructing the automated assistant module 18 to review call or text logs, and/or (c) adjusting settings for the operation of the automated assistant module 18.

The automated assistant module 18 can be configured to operate as an automated personal assistant that uses a traditional phone number to handle calls. An incoming call directed to the first user device 12 can be received by the automated assistant module 18. The automated assistant module 18 can interact autonomously with callers, managing interactions by asking for the purpose of the call and assessing factors such as sentiment, location, schedule, and urgency to decide the most appropriate response. If desired, the assistant can convert the call into various tasks, such as transferring urgent calls directly to the first user 14, sending follow-up text messages, or scheduling meeting invites for ongoing discussions.

The automated assistant module 18 can be configured to, for example when an incoming call is received by the first user device 12, determine (a) an importance of the incoming call and (b) based on the importance of the incoming call, an appropriate response. The importance of the incoming call can be determined based on (i) a location or number from which the incoming call originated, (ii) words used by the caller, and/or (iii) a schedule of the first user 14. An appropriate response can include (a) the automated assistant module 18 disconnecting the incoming call, (b) the automated assistant module 18 taking a message, (c) the automated assistant module 18 answering the incoming call using a voice generated by a synthesized speech generator 22, (d) the automated assistant module 18 sending an alert to the first user 14 to answer the incoming call, and/or (e) the automated assistant module 18 sending a text message to the caller.

In various aspects, the appropriate response can include the automated assistant module 18 asking the caller the nature of the phone call. The automated assistant module 18 can determine the appropriate follow up based on the caller response to this question. For example, the automated assistant module 18 can analyze the caller response for sentiment and/or urgency, in addition to the plain meaning of the caller response. The automated assistant module 18 can be further configured, based on the response, to ask a follow-up question and to determine the importance of the incoming call based in part on a response to the follow up question.

After determining the importance of the incoming call, the automated assistant module 18 can be configured to schedule tasks (a) on the first user device 12, or (b) on another device (e.g., a second user device such as another device of the first user 14 or on a device of the caller) via a communication from the first user device 12. The task can include the automated assistant module 18 commanding the first user device 12 to do one of the following: (a) alert the user 14 to answer the incoming call, (b) place an event on an electronic calendar of the first user 14, (c) send a SMS message to the first user 14 or to the caller, or (d) schedule a meeting invitation on the first user device 12 or on another device via a communication from the first user device 12. The task can be sent to the first user device 12 to be stored on a task list 38. The first user 14 can access the task list 38 using the first user device 12.

In various embodiments, the automated assistant module 18 can determine whether to direct an incoming call to the first user 14. The automated assistant module 18 can direct the incoming call to the first user 14 in response to the incoming call coming from a known number and/or in response to the first user 14 being presently available (e.g., not away, not busy, not in a meeting, etc.) for example. The automated assistant module 18 can be in electronic communication with a phone number directory 20. The phone number directory 20 can be part of the memory of the first user device 12 (e.g., stored on a cell phone for example). The phone number directory 20 can be transferred from a premise-based PBX/switch. The phone number directory 20 can be a directory service running in the cloud. The phone number directory 20 can be information stored and updated/retrieved on a network drive or cloud-drive. The phone number directory 20 can include a list of known phone numbers (e.g., a contact list). The phone number directory 20 can include a list of known phone numbers associated with a spam or scam caller. In various embodiments, the automated assistant module 18 can compare the phone number associated with the incoming call with a list of phone numbers in the phone number directory 20 to determine whether to direct the incoming call to the first user 14 or to direct the incoming call to an automated personal assistant. For example, the first user 14 can configured to automated assistant module 18 to direct incoming calls from certain phone numbers to the first user device 12. Conversely, the first user 14 can configured to automated assistant module 18 to direct incoming calls from certain phone numbers to automated personal assistant (i.e., the automated assistant module 18).

When directing the incoming call to the automated personal assistant, the automated assistant module 18 can use a large language model (LLM) processor 24 to generate text from spoken language and an artificial intelligence (AI) engine 30 for understanding, identifying, and weighting the spoken words used by the caller. The automated assistant module 18 can utilize the LLM processor 24 to convert incoming audio data into text using a natural language processing (NLP) module 26. The automated assistant module 18 can include or be in communication with the NLP module 26. The NLP module 26 can be configured as a live speech analyzer. In various embodiments, the automated assistant module 18 can combine computational linguistics-rule-based modeling of human language-with statistical, machine learning, and/or deep learning models. Together, these technologies enable the system 100 to process human language in the form of voice data and to 'understand' its full meaning, complete with the speaker or writer's intent and sentiment.

In various embodiments, the NLP module 26 can be implemented using Python programing language. In this regard, the Python programing language can provide a wide range of tools and libraries for attacking specific NLP tasks. Many of these are found in the Natural Language Toolkit, or natural language toolkit ("NLTK"), an open-source collection of libraries, programs, and education resources for building NLP programs.

In various embodiments, the NLP module 26, the sentiment analyzer 28, and/or the AI engine 30 is configured for at least one of speech recognition, part of speech tagging, word sense disambiguation, named entity recognition, co-reference resolution, sentiment analysis, natural language generation, or the like. In this regard, the NLP module 26 can be configured to break down human audio data (e.g., as received from a caller via an audio input device) in ways that help the automated assistant module 18 make sense of what the automated assistant module 18 is ingesting. "Speech recognition," as referred to herein, includes speech-to-text. For example, speech recognition includes the task of reliably converting voice data into text data. "Part of speech tagging," as referred to herein includes grammatical tagging. In this regard, part of speech tagging includes the process of determining the part of speech of a particular word or piece of text based on its use and context. For example, part of speech tagging can identify 'make' as a verb in 'I can make a paper plane,' and as a noun in 'What make of car do you own?' "Word sense disambiguation" as referred to herein is the selection, by the automated assistant module 18, of the meaning of a word with multiple meanings through a process of semantic analysis that determine the word that makes the most sense in the given context. For example, word sense disambiguation helps distinguish the meaning of the verb 'make' in 'make the grade' (achieve) vs. 'make a bet' (place). Named entity recognition, or NEM, identifies words or phrases as useful entities. NEM identifies 'Kentucky' as a location or 'Fred' as a man's name. "Co-reference resolution," as referred to herein includes the task of identifying if and when two words refer to the same entity. For example, the automated assistant module 18 can be configured to determine the person or object to which a certain pronoun refers (e.g., 'she' = 'Mary'). In various embodiments "co-reference resolution," can also involve identifying a metaphor or an idiom in the text (e.g., an instance in which 'bear' isn't an animal but a large hairy person). "Sentiment analysis," as referred to herein includes extraction of subjective qualities (e.g., attitudes, emotions, sarcasm, confusion, suspicion, or the like) from audio data (e.g., received from the audio input device). "Natural language generation," as referred to herein refers to the task of putting structured information into human language.

The NLP module 26 can include or be in communication with a sentiment analyzer module 28. In various embodiments, the sentiment analysis can be performed using the sentiment analyzer module 28 configured to receive an output from the NLP module 26 and perform sentiment analysis. "Sentiment analysis," as referred to herein includes automatically detecting emotional undertones of text and classifying them as positive, negative, or neutral. In various embodiments, the sentiment analyzer module 28 is configured to determine an urgency of the incoming call (e.g., via analysis of the audio data and/or text data of the caller's voice/language).

It should be understood that the AI engine 30 can include all or some aspects of the NLP module 26 and/or the sentiment analyzer module 28. The NLP module 26, the sentiment analyzer module 28, and/or the AI engine 30 can be implemented using a single processor or multiple processors. The AI engine 30, the NLP module 26, and/or the sentiment analyzer module 28 can represent different aspects of a single module or can be operated as separate modules in communication with one another.

In various aspects, the automated assistant module 18 can include a decision engine 32 configured to determine how to respond to the incoming call using the output from the LLM processor 24, the NLP module 26, the sentiment analyzer 28, and/or the AI engine 30. The decision engine 32 can analyze the text generated by the LLM processor 24 for urgency, intent, and context. The decision engine 32 can be configured to decide whether to generate the task, directly connect the incoming call with the first user 14, or use the impersonator engine 34 to handle the incoming call. The decision engine 32 can take into account various factors determined by the LLM processor 24 and/or the AI engine 30 such as urgency, intent, and other context such as the schedule of the first user 14 and/or the location of the first user 14.

The automated assistant module 18 can generate text-based responses or tasks based on an output of the decision engine 32. For example, the automated assistant module 18 can create text messages or email alerts. The automated assistant module 18 can prepare text for the synthesized speech generator 22 to convert into speech. For example, the automated assistant module 18 can prepare text including a response and/or a message to the incoming caller, which is subsequently converted into speech using the synthesized speech generator 22. The automated assistant module 18 may also have an artificial intelligence component that learns the answers to caller questions, for example by comparing questions asked and user's answers.

The automated assistant module 18 can include, and/or be in communication with, the synthesized speech generator 22. The speech generator 22 can include computer program instructions that cause one or more processors (e.g., the LLM processor 24) to convert the text generated by the automated assistant module 18 into speech/audio. The speech generator 22 can include a text-to-speech (TTS) engine that converts text generated by automated assistant module 18 into speech and transmits the speech to one or more of the plurality of the incoming caller's devices, where respective caller can hear the speech.

The automated assistant module 18 can include, and/or be in communication with, the impersonator engine 34. The impersonator engine 34 can include a voice-trained model configured to convert text and/or audio into audio using the user's voice characteristics. The impersonator engine 34 can be configured to modify the speech/audio to sound like the user's voice model. In this regard, the system 100 provides a personal touch when the automated assistant handles the call. Stated differently, the synthesized speech generator 22 utilizes the impersonator engine 34 to impersonate or simulate the voice model (i.e., tone, pitch, volume, pace/rate of speech, cadence, resonance, articulation, breathiness, inflection, accent, quality (e.g., smooth, raspy), timbre, etc.) of the first user 14 when generating the audio signal. In various aspects, the impersonator engine 34 generates an audio signal that simulates how loud or soft the user 14 speaks, how clearly the user 14 pronounces words, the speed of the user's 14 speech, the way the user 14 ends sentences, and the overall "texture" of the user's 14 voice. In this regard, the automated assistant module 18 can answer incoming calls using a voice generated by the synthesized speech generator 22 and/or the impersonator engine 34 that mimics the voice of the first user 14.

The automated assistant module 18 can include, and/or be in communication with, a personal call manager (PCM) router 36. The PCM router 36 can connect the incoming call to the automated assistant module 18 for LLM Analysis. In various aspects, the PCM router 36 can decide whether to route the call directly to the first user 14 or to the automated assistant module 18 based on a set of predefined rules (e.g., caller ID, time of day, user availability, etc.).

The automated assistant module 18 can include, and/or be in communication with, a LLM router 40. The LLM router 40 can handle the delivery of voice or text messages back to the caller or to the first user 14, depending on the decision from the decision engine 32.

The automated assistant module 18 can include, and/or be in communication with, a message center 42. The automated assistant module 18 can be configured to monitor text messages transmitted to the first user device 12 and, when a text message is received by the first user device 12 (a) determine the importance of the text message, and (b) based on the importance of the text message, determine an appropriate response to the text message. An appropriate response to the text message can be determined similar to the manner in which an appropriate response to an incoming call would be determined, except that the automated assistant module 18 analyzes text only, without audio.

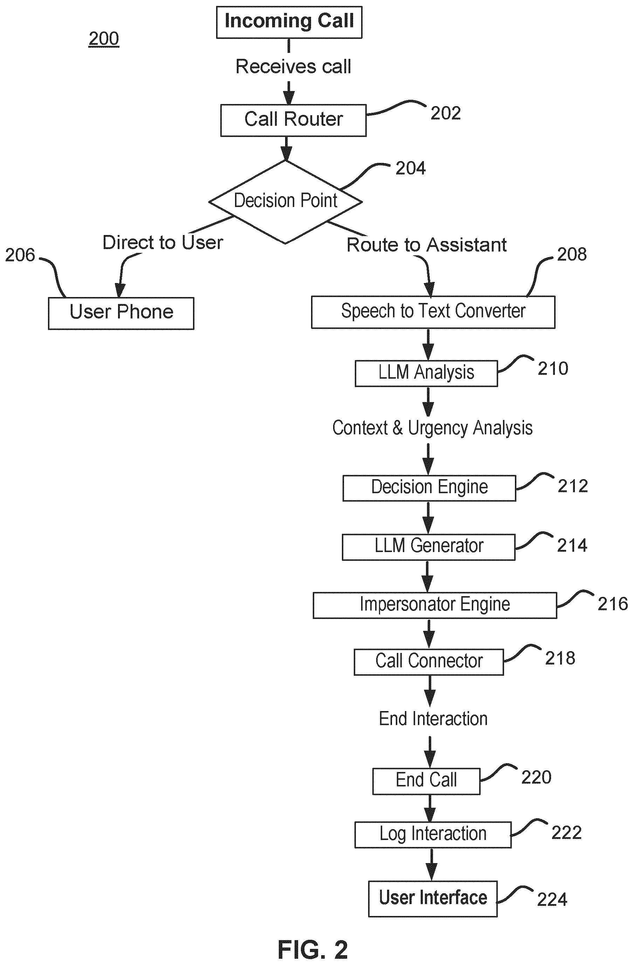

FIG. 2 is a flow chart for a computerized system 200 for automatically managing an incoming phone call from a caller to a cellular phone or an internet phone, in accordance with various embodiments. For ease of description, the system 200 is described below with reference to FIG. 1. The system 200 of the present disclosure, however, is not limited to use of the exemplary system 100 of FIG. 1.

At block 202, the PCM router 36 can route an incoming call intended for the first user device 12 to the automated assistant module 18.

At block 204, the decision engine 32 can determine whether to direct the incoming call to the first user device 12 or the personal assistant (i.e., the automated assistant module 18). In various aspects, the automated assistant module 18 can utilize the decision engine 32 to determine an appropriate response when an incoming call is received by the first user device 12.

At block 206, the PCM router 36 can direct the incoming call to the first user device 12. For example, the incoming call can be directed to the first user device 12 based on an importance of the incoming call, whether the incoming call is from a known person/phone number, and/or based on an availability of the first user 14.

At block 208, the PCM router 36 can direct the incoming call to the automated assistant module 18. The NLP module 26 can be used for speech recognition, including speech-to-text conversion, of the incoming call.

At block 210, the text and/or audio of the incoming call can be analyzed by at least one of the NLP module 26, the sentiment analyzer 28, and the AI engine 30 for context and/or urgency analysis.

At block 212, the decision engine 32 can determine an appropriate response to the incoming caller based, at least in part, upon the analysis of block 210.

At block 214, the synthesized speech generator 22 can convert the response into text in the appropriate language (e.g., using a large language model). The text can be converted into speech (e.g., text-to-speech).

At block 216, impersonator engine 34 can be configured to modify the speech/audio to sound like the user's voice model.

At block 218, the LLM router 40 can be used to deliver the response back to the caller.

At block 220, when the caller hangs up and/or when it is determined that the conversation/interaction with the caller is complete, the automated assistant module 18 can end the call.

At block 222, the automated assistant module 18 can log the interaction with the caller. For example, the phone number of the caller, the transcript of the conversation, the duration of the call, the time of the call, and any other suitable information about the conversation can be logged and stored.

Block 224 represents a user interface that can be utilized by the first user 14 (e.g., using the first user device 12 via the API 12A) to set preferences, review logs, and adjust settings of the automated assistant module 18 for configuration and monitoring purposes.

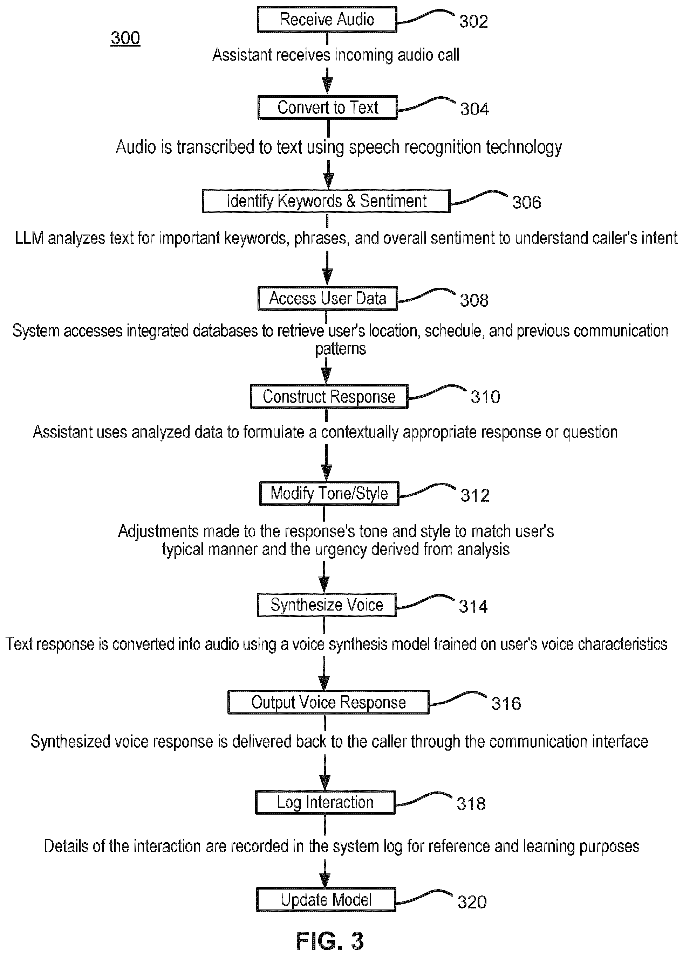

FIG. 3 is a flow chart for a computerized method 300 for automatically managing an incoming phone call from a caller to a cellular phone or an internet phone, in accordance with various embodiments. For ease of description, the method 300 is described below with reference to FIG. 1. The method 300 of the present disclosure, however, is not limited to use of the exemplary system 100 of FIG. 1.

In step 302, the method 300 includes receiving an incoming audio call. The PCM router 36 can route the incoming call intended for the first user device 12 to the automated assistant module 18. The decision engine 32 can determine whether to direct the incoming call to the first user device 12 or the personal assistant (i.e., the automated assistant module 18). In various aspects, the automated assistant module 18 can utilize the decision engine 32 to determine an appropriate response when an incoming call is received by the first user device 12. The PCM router 36 can direct the incoming call to the first user device 12. For example, the incoming call can be directed to the first user device 12 based on an importance of the incoming call, whether the incoming call is from a known person/phone number, and/or based on an availability of the first user 14.

In step 304, the audio is transcribed to text using speech recognition. The PCM router 36 can direct the incoming call to the automated assistant module 18. The NLP module 26 can be used for speech recognition, including speech-to-text conversion, of the incoming call.

In step 306, the sentiment analyzer 28 can identify keywords, key phrases, and/or sentiment. The text and/or audio of the incoming call can be analyzed by at least one of the NLP module 26, the sentiment analyzer 28, and the AI engine 30 for context and/or urgency analysis. Keywords and key phrases can be used to determine context and/or urgency.

In step 308, the automated assistant module 18 can access user data (i.e., data of the first user 14). The automated assistant module 18 can access integrated databases to retrieve the user's location, schedule, and/or previous communication patterns. This can be used to determine scheduling, call routing, etc.

In step 310, the decision engine 32 can determine an appropriate response to the incoming caller based, at least in part, upon the analysis of steps 306 and 308. The synthesized speech generator 22 can convert the response into text in the appropriate language (e.g., using a large language model).

In step 312, the impersonator engine 34 can be configured to modify the speech/audio to sound like the user's voice model. Adjustments can be made to the response's tone and style to match user's typical manner and the urgency derived from analysis.

In step 314, the synthesized speech generator 22 can convert the text into speech / audio (e.g., text-to-speech). For example, the text response is converted into audio using a voice synthesis model trained on user's voice characteristics (e.g., the impersonator engine 34).

In step 316, the LLM router 40 can be used to deliver the response back to the caller. When the caller hangs up and/or when it is determined that the conversation/interaction with the caller is complete, the automated assistant module 18 can end the call.

In step 318, the automated assistant module 18 can log the interaction with the caller. For example, the phone number of the caller, the transcript of the conversation, the duration of the call, the time of the call, and any other suitable information about the conversation can be logged and stored for future reference and learning.

In step 320, the automated assistant module 18 can update one or more models (e.g., the LLM model and/or the impersonator engine voice model) based on the interaction with the caller. The automated assistant module 18 can update the model's response patterns based on ongoing interactions and user feedback to enhance accuracy and personalization over time.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A computerized system configured to automatically manage an incoming call from a caller to a cellular phone or an internet phone, wherein the computerized system comprises:
a first user device that is the cellular phone or the internet phone and that is assigned to a
first user;
a computerized telephony network in communication with the first user device;
an automated assistant module in communication with the first user device;
a synthesized speech generator in communication with the automated assistant module; and
a phone number directory in communication with the automated assistant module;
wherein the automated assistant module is configured to, when the incoming call is received by the first user device:
determine an importance of the incoming call based on (i) a location or number from which the incoming call originated, (ii) words used by the caller, and/or (iii) a schedule of the first user; and
determine, based on the importance of the incoming call, an appropriate response.

2. The computerized system of claim 1, wherein the appropriate response is one of the automated assistant module (a) disconnecting the incoming call, (b) taking a message, (c) answering the incoming call using a voice generated by the synthesized speech generator, (d) sending an alert to the first user to answer the incoming call, and (e) sending a text message to the caller.

3. The computerized system of claim 2, wherein the automated assistant module is configured to answer the incoming call with the synthesized speech generator mimicking the voice of the first user.

4. The computerized system of any preceding claim, wherein after determining the importance of the incoming call, the automated assistant module is configured to schedule tasks (a) on the first user device, or (b) on another device via a communication from the first user device.

5. The computerized system of claim 4, wherein the task comprises commanding the first user device to do one of the following (a) alert the user to answer the incoming call, (b) place an event on an electronic calendar of the first user, (c) send a SMS message to the first user or to the caller, or (d) schedule a meeting invitation on the first user device or on another device via a communication from the first user device.

6. The computerized system of any preceding claim, wherein the appropriate response of the automated assistant module is to ask the caller the nature of the phone call.

7. The computerized system of claim 6, wherein the automated assistant module is configured to analyze a caller response for one or more of (a) sentiment, and (b) urgency.

8. The computerized system of claim 6 or claim 7, wherein the automated assistant module is further configured, based on the response, to ask a follow-up question and to determine the importance of the incoming call based in part on a response to the follow up question.

9. The computerized system of any preceding claim, wherein the automated assistant module is further configured to monitor text messages transmitted to the first user device and, when a text message is received by the first user device (a) determine the importance of the text message, and (b) based on the importance of the text message, determine an appropriate response to the text message.

10. A computerized method for automatically managing an incoming call from a caller to a cellular phone or an internet phone, wherein the computerized method comprises the following steps:
receiving on a first user device that is the cellular phone or the internet phone, and is assigned to a first user, the incoming call, which is transmitted to the first user device by a computerized telephony network;
when the incoming call is received by the first user device, an automated assistant module in communication with a phone number directory and a synthesized speech generator, determining an importance of the incoming call based on (i) a location or number from which the incoming call originated, (ii) spoken words used by the caller, and/or (iii) a schedule of the first user, and based on the importance of the incoming call, determining an appropriate response in communication with the first user device; and
the automated assistant module using a large language model, LLM, processor to generate text from spoken language and using an artificial intelligence engine for understanding, identifying, and weighting the spoken words used by the caller.

11. The computerized method of claim 10 that further comprises the step of the automated assistant module accessing a database of the first user's prior communications with the caller to assist in determining the importance of the incoming call.

12. The computerized method of claim 10 or claim 11, that further comprises the step of a personal call manager router connecting the incoming call to the LLM processor, and the LLM processor determining whether to route the incoming call directly to the first user or to the automated assistant module based on a caller's identification, a time of day, and/or a first user's schedule and optionally wherein the automated assistant module comprises a decision engine and, based on the output of the LLM processor, the decision engine determining whether to (a) generate a task, (b) attempt to directly connect the incoming call to the first user, or (c) use a synthesized speech generator to respond to the incoming call using speech.

13. The computerized method of any of claims 10 to 12, further comprising the LLM processor generating based on the importance (a) SMS or email responses to the caller, or (b) one or more tasks and/or wherein the first user device comprises an API that enables the first user to modify the automated assistant module by (a) setting preferences for the automated assistant module, (b) instructing the automated assistant module to review call or text logs, and (c) adjusting settings for the operation of the automated assistant module.

14. A computerized apparatus configured to automatically manage incoming phone calls to a cellular phone, wherein the computerized apparatus comprises: (a) a first user device, having an assigned first user and that is a cellular telephone or an internet telephone; (b) a computerized telephony network in communication with the first user device; (c) an automated assistant module in communication with the first user device; (d) a speech generator in communication with the automated assistant module; (e) a phone number directory in communication with the first user device and the automated assistant module; and (f) a processor and a tangible, non-transitory memory configured to communicate with the processor, the non-transitory memory having instructions stored thereon which, when executed by the processor, are configured to cause the computerized apparatus to execute a method including the following steps:
the first user device receiving an incoming call transmitted by the computerized telephony network; and
the automated assistant module determining an importance of the incoming call, and based on the importance of the incoming call determining an appropriate response.

15. The computerized apparatus of claim 14 that further includes a synthesized speech generator in communication with the automated assistant module, and wherein when the processor executes the stored instructions it causes the computerized apparatus to further execute the step of the automated assistant module responding using a voice generated by the synthesized speech generator, wherein the voice mimics the voice of the first user and its tone and style are modified to match the first user's typical manner of speech based on the importance of the incoming call,
and/or wherein when the processor executes the stored instructions it causes the computerized apparatus to further execute the step of the automated assistant module responding using a text response to the caller,
and/or wherein when the processor executes the stored instructions it causes the computerized apparatus to further execute the steps of the LLM processor receiving the incoming call when the incoming call is directed to the automated assistant module, and the LLM processor converting the incoming call into text,
and optionally wherein when the processor executes the stored instructions it causes the computerized apparatus to further execute the steps of, after the incoming call is received by the first user device, (a) a PCM router determining whether to route the incoming call to the automated assistant module, and (b) a decision engine analyzing the text generated by the LLM processor for urgency, intent, and context.
